# FASCICULE DE BREVET EUROPEEN

(11) **EP 3 344 495 B1**
(45) Date de publication et mention de la délivrance du brevet: **19.06.2019**
(21) Numéro de dépôt: 16775763.2
(22) Date de dépôt: 02.09.2016
(51) Int. Cl.: B60Q 1/56, E05B 81/76, F21V 8/00, G02B 6/08

(54) **ELEMENT DE CARROSSERIE COMPORTANT UN DISPOSITIF D'ECLAIRAGE COMPRENANT UN GUIDE DE LUMIERE DIFFUSANT**
WAGENKASTENELEMENT MIT EINER BELEUCHTUNGSVORRICHTUNG MIT EINEM STREULICHTLEITER
CAR BODY ELEMENT COMPRISING AN ILLUMINATING DEVICE WITH A DIFFUSING LIGHT GUIDE

(30) Priorité: 04.09.2015 FR 1558197
(43) Date de publication de la demande: 11.07.2018
(73) Titulaire: Compagnie Plastic Omnium, 69007 Lyon (FR)
(72) Inventeur: KHAYAT, Issam, 69001 Lyon (FR)
(74) Mandataire: LLR
(86) Numéro de dépôt international: PCT/FR2016/052172
(87) Numéro de publication internationale: WO 2017/037395

(56) Documents cités:
- DE-A1-102004 031 796
- DE-A1-102011 016 407
- DE-A1-102013 223 730
- FR-A1- 2 989 042
- JP-A- H01 101 247
- US-A1- 2008 025 039

## Description

L'invention a pour objet une carrosserie, ou un élément de carrosserie de véhicule automobile dans lequel un effet de style est recherché.

La carrosserie du véhicule est formée par tous les éléments formant la surface externe du véhicule, qui sont généralement visibles de l'extérieur du véhicule, et qui participent globalement à la forme générale extérieure et au style du véhicule.

Pour souligner certaines parties de la carrosserie du véhicule les stylistes peuvent créer des renfoncements se présentant comme des zones localement concaves, à profil et à longueur variable, de forme généralement étirée selon une direction principale, orientée verticalement ou horizontalement selon l'effet recherché.

Lorsque leur forme est accentuée, ils peuvent également avoir un aspect fonctionnel et servir de logement à un équipement spécifique ou encore permettre la saisie manuelle de l'élément de carrosserie sur lequel ils sont intégrés. C'est le cas par exemple, mais pas exclusivement, du renfoncement situé sur le hayon arrière du véhicule et qui sert de poignée pour ouvrir ce dernier.

Aussi, pour ce qui fait l'objet de l'invention et de la présente description on entend par renfoncement un repli de forme allongée, réalisé à la surface de la carrosserie du véhicule par un ou plusieurs éléments formant une partie intégrante de cette dernière, et dans lequel une partie au moins de la zone en renfoncement se trouve en regard d'une autre partie de la carrosserie adjacente à ce renfoncement. Le renfoncement surplombe localement la carrosserie.

Pour renforcer l'effet de style procuré par ces renfoncements, il peut apparaitre judicieux de disposer un dispositif d'éclairage à l'intérieur du renfoncement permettant d'émettre un flux de lumière le long de la ligne stylistique formée par ledit renfoncement. Cet éclairage peut également avoir un aspect fonctionnel lorsqu'il est placé en regard d'une zone à rendre visible telle qu'une plaque d'immatriculation ou une poignée de porte.

La publication DE 102004031796 décrit un dispositif d'éclairage comprenant un guide de lumière pour éclairer la surface d'une carrosserie de véhicule automobile. Lorsque la surface à éclairer est importante, comme cela est le cas lorsque l'on cherche à éclairer une plaque d'immatriculation, le guide de lumière est réalisé en matière plastique moulée comprenant des faces de sortie de la lumière.

Ce dispositif présente toutefois des inconvénients lorsque la surface à éclairer est soumise à des sollicitations mécaniques ou à des chocs susceptibles d'endommager partiellement le dispositif lumineux, privant alors le véhicule d'éclairage à des endroits ou cet éclairage est imposé par la réglementation, comme cela peut se présenter dans le cas d'un feu de position ou de l'éclairage d'une plaque d'immatriculation.

De plus, l'encombrement du guide de lumière peut priver le concepteur du véhicule de possibilités d'intégration du dispositif lumineux avec d'autres organes tel que le dispositif de commande d'ouverture d'un hayon.

Enfin, la réalisation pratique de ce moulage et l'intégration dans le véhicule d'une pièce de grande longueur pose un certain nombre de problèmes liés aux risques de rupture et de détérioration de l'état de surface.

Un élément de carrosserie selon le préambule de la revendication 1 est connu de DE 10 2013 223 730.

L'invention, qui a pour objet d'apporter une solution originale aux problèmes posés ci-dessus concerne un élément de carrosserie comprenant les caractéristiques de la revendication 1, formant une surface externe d'un véhicule automobile, et comprenant un dispositif d'éclairage de plaque d'immatriculation.

Ce dispositif d'éclairage se caractérise en ce qu'il comprend un guide de lumière diffusant relié à une source de lumière, formé d'une pluralité de fibres optiques arrangées en nappe souple de sorte que le dispositif d'éclairage émet un flux lumineux en tout point d'une partie éclairante dudit guide de lumière diffusant, et en ce que le guide de lumière diffusant est monté sur un support souple à l'intérieur duquel est disposé un dispositif de commande d'ouverture dudit élément de carrosserie, s'étendant transversalement sur toute la longueur du dispositif d'éclairage de sorte que ladite commande d'ouverture est actionnable en un point quelconque de la partie éclairante du dispositif d'éclairage.

Par guide optique ou guide de lumière, on entend ici une pièce transparente ou translucide à l'intérieur de laquelle des rayons lumineux se déplacent de manière contrôlée suivant une direction générale commune depuis une première extrémité du guide comportant une surface d'entrée à proximité de laquelle sont disposées une ou plusieurs sources de lumière, jusqu'à une surface de sortie d'où les rayons lumineux émergent.

La propagation de la lumière à l'intérieur du guide de lumière se fait par réflexions internes successives des rayons lumineux sur les faces du guide de lumière appelées faces de réflexions internes.

La surface de sortie peut être formée par la face ou la section opposée à la face d'entrée ou de manière alternative par une face latérale du guide de lumière.

Dans la présente description, et de manière connue de l'homme du métier, on entend par guide de lumière diffusant, un guide de lumière dans lequel la surface de sortie de la lumière est formée par une face latérale dudit guide de lumière. Cette surface, qui occupe tout ou partie de la surface du guide de lumière, est généralement sensiblement parallèle à la direction générale du guide de lumière. Ainsi, pour un guide de lumière diffusant de section droite circulaire, tel qu'une fibre optique, la lumière émerge du guide de lumière selon une direction sensiblement radiale. Un guide de lumière diffusant permet donc de distribuer un flux lumineux sensiblement constant en tout point de la surface de sortie de la partie diffusante du guide, formant la partie éclairante.

La réalisation d'un guide de lumière diffusant peut faire appel à des technologies différentes et connues en tant que telles. Une première technique consiste à traiter la surface de la fibre de manière à la rendre rugueuse. Les rugosités sont alors autant de surfaces réfléchissantes permettant à une partie de la lumière de s'échapper du guide de lumière vers l'extérieur. Cette technologie est peu onéreuse, et s'avère très efficace pour des guides de lumières diffusants de faible longueur, en pratique pour des longueurs inférieures à 3 m. Elle permet également de ne rendre diffusante que la seule partie du guide de lumière servant à l'éclairage, et formant ici la partie éclairante.

Une autre technologie consiste à doper le matériau formant le guide de lumière à l'aide de particules réfléchissantes de taille microscopique. Cette technologie permet de rendre plus uniforme la diffusion de la lumière.

La partie des fibres optiques non traitées, et donc non diffusante, sert à conduire la lumière sans déperdition, depuis la source de lumière jusqu'à la partie diffusante, organisée en nappe.

L'effet de style obtenu à l'aide d'un dispositif d'éclairage diffusant disposé au-dessus de la plaque d'immatriculation permet ainsi de créer un halo lumineux distribué de manière régulière tout le long de la partie éclairante.

L'utilisation de fibres optiques, de petit diamètre permet de réaliser une nappe fournissant un flux lumineux uniforme avec une intensité suffisante sur toute la longueur de la plaque d'immatriculation.

En cas de choc ou de tout autre action mécanique imprévue, seules une ou deux fibres peuvent être endommagées. Mais l'éclairage de la plaque d'immatriculation reste assuré par les autres fibres optiques de la nappe, de sorte que le véhicule peut poursuivre sa route en toute sécurité.

Cet éclairage surfacique réparti peut également s'avérer particulièrement utile pour éclairer ou pour signaler la localisation d'un élément fonctionnel situé dans ou à proximité de la plaque d'immatriculation. Ceci est le cas par exemple du dispositif de commande d'ouverture d'un hayon, dont il peut paraitre judicieux de signaler par un trait lumineux la présence ainsi que la zone le long de laquelle ce dispositif de commande d'ouverture s'étend.

En outre, et comme on le verra par la suite, le faible encombrement du dispositif selon l'invention, permet de monter sur un support commun, le dispositif d'éclairage et le dispositif de commande d'ouverture.

L'élément de carrosserie selon l'invention peut aussi comprendre isolément ou en combinaison les caractéristiques définies par les revendications dépendantes 2 à 10.

L'invention sera mieux comprise à la lecture des figures annexées, qui sont fournies à titre d'exemples et ne présentent aucun caractère limitatif, dans lesquelles :
- La figure 1 représente un hayon arrière de véhicule comportant un premier renfoncement situé au-dessus de la plaque d'immatriculation.
- La figure 2 est une vue en coupe selon A-A du hayon.
- La figure 3 représente de manière schématique une vue en perspective d'un support sur lequel est disposé le dispositif d'éclairage diffusant.
- La figure 3a représente des fibres optiques organisées en nappe.
- La figure 4 représente une vue en coupe selon A-A d'un dispositif d'éclairage diffusant combiné avec un dispositif de commande d'ouverture à effet capacitif.
- La figure 5 représente une vue en coupe selon A-A d'un dispositif d'éclairage selon une variante d'exécution du dispositif de la figure 4, ne faisant toutefois pas partie de la présente invention.
- La figure 6 représente une vue en coupe selon A-A d'un dispositif d'éclairage combiné avec un dispositif de commande d'ouverture à effet optique.
- La figure 6a représente une vue en coupe schématique d'un dispositif de commande à effet optique.
- La figure 7 représente une vue en coupe selon A-A d'un dispositif d'éclairage combiné avec un dispositif de commande d'ouverture à effet acoustique.
- La figure 7a représente une vue en coupe schématique d'un dispositif de commande à effet acoustique.
- La figure 8 représente une vue en coupe selon A-A d'un dispositif d'éclairage combiné avec un dispositif de commande d'ouverture à effet résistif.
- La figure 8a représente une vue en coupe schématique d'un dispositif de commande à effet résistif.
- La figure 9 représente un hayon de véhicule comportant un deuxième renfoncement situé en dessous de la vitre arrière.
- La figure 10 représente une vue en coupe selon B-B d'un dispositif d'éclairage situé dans le renfoncement illustré à la figure 9.

L'élément de la carrosserie servant de support à la présente description est formée, de manière non limitative, par le hayon arrière 15 du véhicule.

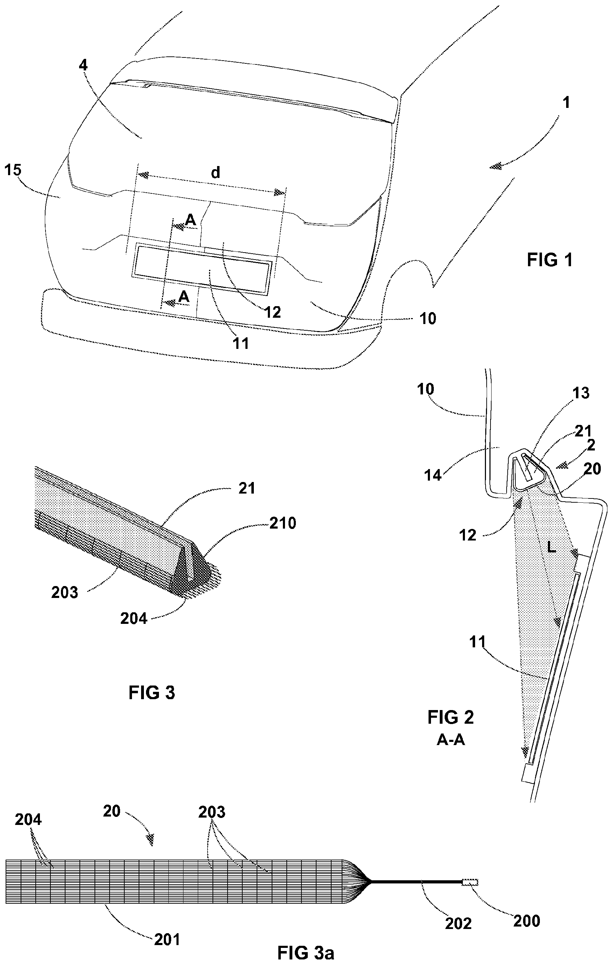

La paroi 10, formant le côté externe de l'élément de carrosserie visible de l'extérieur, et la vitre 4 de la partie de carrosserie 1 formée par le hayon 15, et illustrée à la figure 1, participent donc au style général du véhicule.

Un premier renfoncement horizontal 12 est pratiqué dans la partie du hayon 15 située au-dessus de la plaque d'immatriculation 11. Ce renfoncement s'étend transversalement sur une longueur d supérieure ou égale à la longueur de la plaque d'immatriculation 11.

Le renfoncement 12 surplombe localement la partie de la carrosserie supportant la plaque d'immatriculation 11.

La coupe selon A-A, illustrée à la figure 2, permet de mieux visualiser la partie du hayon 15 comportant le renfoncement 12.

Un dispositif d'éclairage 2 est disposé dans le renfoncement 12. Ce dispositif d'éclairage comprend un guide de lumière diffusant 20 formé de fibres optiques organisées en nappe. La nappe de fibres optiques, visible à la figure 3a, est composée de tronçons de fibres 204 sensiblement rectilignes et parallèles entre elles. Cette nappe peut comporter des fils de trames 203 assurant une bonne tenue mécanique de l'ensemble.

On distingue la partie éclairante 201 dans laquelle les fibres optique 204 émettent une lumière diffusante dans la direction radiale, et la partie non diffusante 202 permettant de relier la partie éclairante de la nappe 201 à la source de lumière 200 formée préférentiellement par une diode électroluminescente.

Les fibres optiques 204 sont réalisées par extrusion à l'aide d'un matériau plastique tel que du PMMA ou éventuellement du verre. Les fibres ont un diamètre réduit de manière à augmenter la souplesse de la nappe et favoriser son implantation sur le support 21. Le diamètre d'une fibre est inférieur à 1mm et préférentiellement inférieur ou égal à 0,5 mm. Le nombre et la nature des fibres optiques permettent d'adapter la puissance du flux lumineux. Une nappe en fibres de verre comportant une vingtaine de fibres de 0,5mm de diamètre procure un effet lumineux très satisfaisant.

La figure 3 permet de visualiser la forme du support 21 sur lequel la nappe de fibres optiques est disposée.

Le support 21 a une forme générale cylindrique dont la section droite 210 est adaptée pour permettre le montage dudit support sur l'élément de carrosserie. Dans le cas d'espèce, le support 21 est disposé par simple collage ou par emboitement ou encore par simple clipsage sur un rail de fixation 13.

De manière alternative ne faisant toutefois pas partie de la présente invention, la nappe de fibres optiques 20, peut être assemblée avec l'élément de carrosserie par une fixation démontable tel qu'un système de type Velcro™ ou encore une bande adhésive, interposée entre la surface de la nappe 20 et la surface de l'élément de carrosserie 10.

En raison de la flexibilité des fils de trame 203, les fibres optiques 204 de la nappe sont disposées selon des génératrices du cylindre formé par le support 21, de sorte que la nappe épouse la forme générale du support 21. La nappe de fibre peut être collée sur le support 21 ou encore maintenue par serrage contre les parois de l'enfoncement 12 lors de l'insertion du support 21 sur le rail de fixation 13.

En complément des moyens décrits ci-dessus, il est possible de prévoir un moyen de verrouillage, tel qu'une vis, pour assurer l'inviolabilité du dispositif et éviter le démontage du dispositif d'éclairage depuis l'extérieur du véhicule.

Le support 21 peut être réalisé par injection ou par extrusion d'un matériau élastomère, ou encore d'un matériau thermoplastique présentant des propriétés de souplesse et d'élasticité et permettant une grande modularité de son usage.

La partie diffusante 201 des fibres optiques qui est organisée en nappe, s'étend dans la direction transversale tout le long du renfoncement 12 sur une longueur au moins supérieure à la longueur de la plaque d'immatriculation et préférentiellement sur toute la longueur du renfoncement 12.

Le flux lumineux L émanant de la nappe de fibres diffusantes est dirigé exclusivement en direction de la surface de la carrosserie et de la plaque d'immatriculation, sans jamais atteindre de manière directe un observateur externe qui ne perçoit que la seule part du faisceau lumineux réfléchit par la carrosserie et, en particulier, sans jamais éblouir le conducteur d'un véhicule circulant derrière.

Le dispositif d'éclairage permet ainsi, en sus de l'effet de style permettant de souligner la forme du véhicule, d'éclairer, conformément à la réglementation, la plaque d'immatriculation de manière à rendre lisibles les indications alphanumériques permettant d'identifier le véhicule lorsque le véhicule roule en condition de luminosité réduite.

On observera à ce stade, que l'utilisation d'un guide de lumière formé d'une pluralité de fibres optiques permet également de placer la source de lumière 200 disposée à l'extrémité du guide de lumière à un endroit quelconque du côté interne de la carrosserie, dans un endroit protégé, et de faire ressortir vers la partie externe de la carrosserie la seule partie diffusante du guide de lumière par un passage unique pratiqué dans le renfoncement.

La partie 202 des fibres optiques cheminant du coté intérieur de la carrosserie, et qui n'est pas diffusante, permet à la lumière de circuler avec une très faible dispersion depuis la source de lumière 200 jusqu'à la partie externe 201 formant la nappe de fibres. La partie non diffusante des fibres 202 est alors regroupée en un faisceau de faible diamètre et peut passer par un orifice unique de faible diamètre depuis la partie externe de l'élément de carrosserie vers la partie interne de la carrosserie en suivant un trajet non nécessairement rectiligne.

De manière optionnelle, le support 21 peut utilement comprendre un appendice servant de bouchon d'obturation de l'orifice servant de passage au faisceau de fibres.

Les dispositions décrites ci-dessus permettent de supprimer l'usage de vitrages de protection utilisés dans les techniques traditionnelles et séparant la partie émettrice de la lumière de l'extérieur du véhicule, et de réduire les agressions liées aux intempéries de la partie électrique comprenant la source de lumière du dispositif d'éclairage.

Lorsque le renfoncement 12 pratiqué dans la carrosserie sert également de poignée de levage, comme cela est fréquemment le cas lorsqu'il s'agit d'un hayon 15, il peut être intéressant de placer un dispositif de commande d'ouverture dans la zone dans laquelle l'usager du véhicule va placer ses doigts pour relever le hayon 15.

Sous l'effet de l'approche ou de l'exercice d'une simple pression de l'utilisateur, le dispositif de commande autorise le déverrouillage de la serrure fermant le hayon 15.

Pour des raisons de commodité il peut être souhaitable de faire courir le dispositif de commande sur une grande longueur, égale à la longueur dudit renfoncement. Cette disposition permet à l'utilisateur de ne pas avoir à localiser l'endroit précis où il convient de placer ses doigts. Le trait de lumière émanant du dispositif d'éclairage sert alors d'indicateur pour signaler à l'usager l'étendue de la zone dans laquelle il peut opérer pour simultanément commander l'ouverture et soulever le hayon 15.

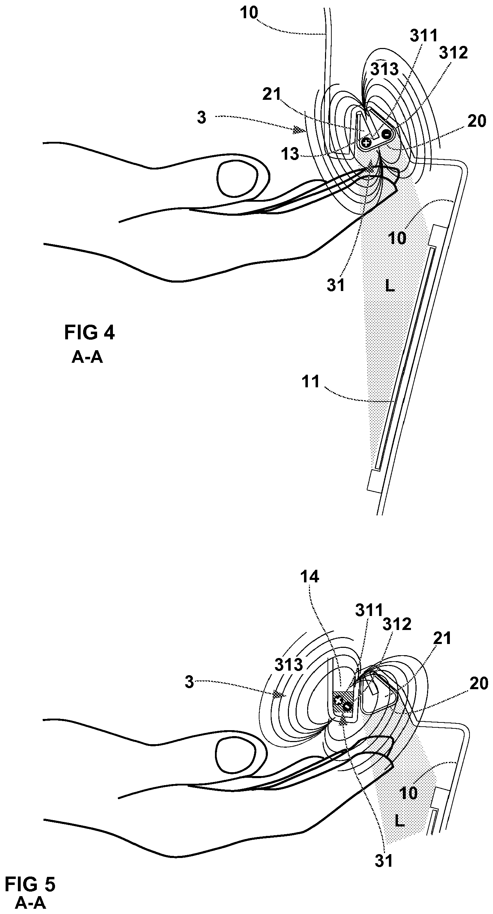

La figure 4, permet d'illustrer le cas d'un dispositif de commande d'ouverture 31 à effet capacitif. Dans cette configuration, deux conducteurs polarisés 311 et 312 créent un champ électromagnétique dans leur environnement proche.

Lorsque les doigts de l'utilisateur pénètrent à l'intérieur du champ électromagnétique, un capteur (non représenté), sensible à la variation de capacité, détecte la variation du champ électromagnétique, et commande l'ouverture du hayon 15.

Il n'est nullement besoin de provoquer un contact physique entre les doigts de l'utilisateur et le détecteur capacitif pour activer la commande. En conséquence de quoi, les conducteurs 311 et 312 peuvent utilement être disposés dans le support 21 comme cela est représenté à la figure 4.

De manière alternative ne faisant toutefois pas partie de la présente invention, et sous réserve que la carrosserie soit perméable aux champs électromagnétiques, les conducteurs 311 et 312 peuvent être placés dans une partie interne de la carrosserie 14, non visible de l'extérieur et opposée à la partie externe 10, et disposée en bordure du renfoncement 12, comme cela est illustré à la figure 5. Cet arrangement permet de disposer l'ensemble des fonctions électriques du côté interne de la carrosserie.

D'autres alternatives de réalisation sont illustrées aux figures suivantes.

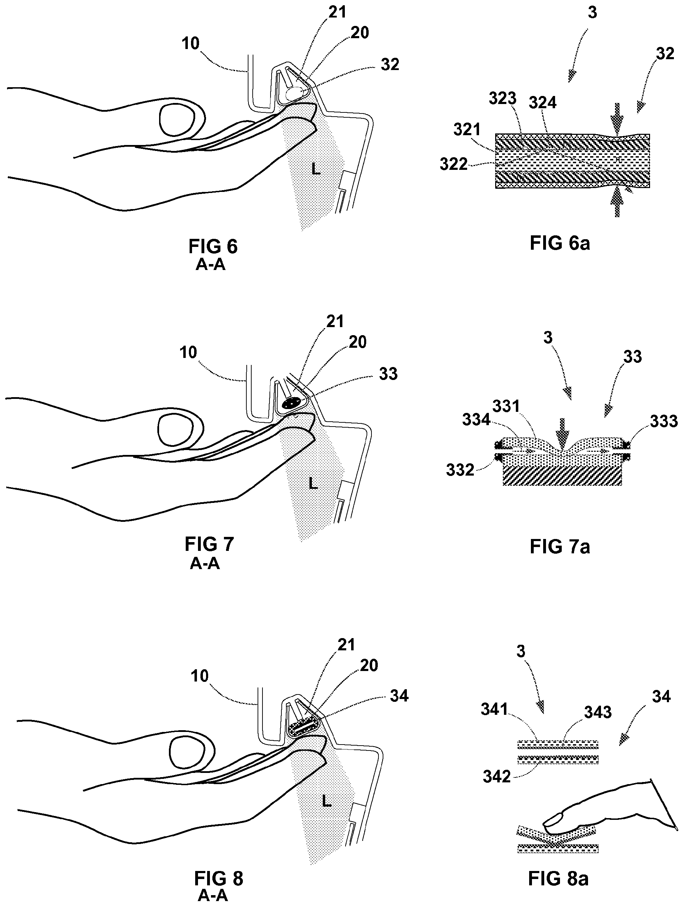

Le dispositif de commande par effet optique 32 illustré aux figures 6 et 6a, est formé d'une fibre optique 321, ayant un index de réfraction n₁, dans laquelle circule un rayon lumineux 322. La fibre optique est disposée à l'intérieur d'un guide 323 ayant un index de réfraction n₃. L'espace 324 entre la fibre 321 et le guide 323 forme une région intermédiaire d'indice de réfraction n₂. Les indices de réfractions sont régis par la relation n₃>n₂>n₁. Sous l'effet de la pression des doigts de l'utilisateur, le guide 323 est pressé contre la fibre optique 321 de sorte que le rayon lumineux n'est plus réfléchi en totalité par la fibre optique, et subit une atténuation dont l'intensité peut être évaluée par une unité de contrôle commandant le dispositif d'ouverture (non représentée).

La figure 7 illustre un dispositif de commande alternatif par effet acoustique 33. Selon cette technologie, illustrée à la figure 7a, le dispositif de commande est formé d'un conduit 331 élastique et déformable. Un émetteur d'onde acoustique 332 ayant une puissance et une fréquence déterminées est placé à une première extrémité du tube, et un récepteur acoustique 333 est disposé à l'autre extrémité du tube. Lorsque le conduit 331 est comprimé sous l'effet de la pression des doigts d'un utilisateur, l'onde acoustique 334 subit une atténuation mesurable par un détecteur (non représenté) relié à l'émetteur et au récepteur. Le détecteur commande alors l'ouverture de la serrure.

Une autre alternative, illustrée à la figure 8, prévoit un dispositif de commande par effet résistif 34. Ce dispositif, illustré à la figure 8a, est formé par deux conducteurs de l'électricité 341 et 342, isolés l'un de l'autre et enfermés dans un conduit élastique et déformable 343. Un générateur (non représenté) maintient une différence de potentiel entre les deux conducteurs. Lorsque le conduit déformable subit une pression, les conducteurs 341 et 342 viennent en contact ou se rapprochent l'un de l'autre, et modifient la résistivité d'un circuit. Un détecteur placé dans le circuit apprécie cette variation de résistivité et émet le signal de commande.

Les dispositifs de commande 32, 33 ou 34 sont sensibles à la pression qu'ils subissent localement. Ils sont placés utilement à l'intérieur du support 21 et le matériau constituant ledit support 21 est élastique et déformable de manière à transmettre la pression exercée par les doigts de l'utilisateur au dispositif de commande d'ouverture.

Ainsi, l'ensemble des dispositifs de commande décrits ci-dessus autorisent l'ouverture du hayon 15 en un point quelconque situé le long du parcours lumineux souligné par le dispositif d'éclairage situé dans le renfoncement 12. Le dispositif d'éclairage et le dispositif de commande d'ouverture sont disposés sur le même support 21, ce qui a pour effet d'alléger les opérations d'assemblage des composants disposés sur le hayon 15, le matériau formant le support 21 présentant une certaine élasticité.

L'effet de style évoqué dans les paragraphes ci-dessus n'est pas limité au seul renfoncement situé au-dessus de la plaque d'immatriculation et servant de poignée de relevage du hayon 15.

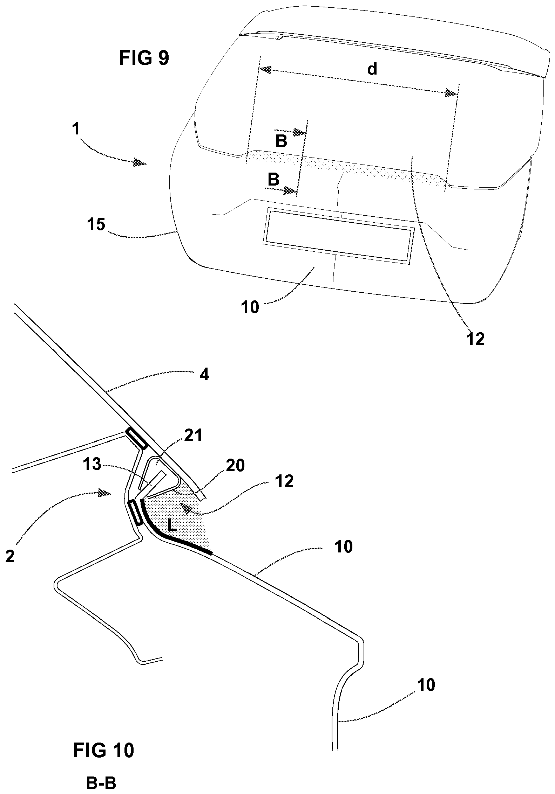

Ainsi, à titre d'exemple, la figure 9 illustre le cas d'un deuxième type de renfoncement 12 disposé sur le hayon 15, au niveau de la limite inférieure de la vitre 4.

La figure 10 représente la vue en coupe selon B-B, dans laquelle la partie inférieure de la vitre 4 déborde légèrement au-dessus de la paroi 10 du hayon pour créer un renfoncement 12, à l'intérieur duquel est logé un dispositif d'éclairage 2 selon l'invention.

Selon l'effet de style recherché, ou le degré de personnalisation du véhicule désiré par son utilisateur, la couleur et l'intensité du faisceau lumineux peuvent être modulés en faisant varier la couleur et l'intensité des diodes électroluminescentes formant la source de lumière et placées à une extrémité du guide de lumière diffusant.

### NOMENCLATURE

1. Carrosserie.
10. Surface externe de la carrosserie (peau) située du côté extérieur de la carrosserie.
11 Plaque d'immatriculation.
12. Renfoncement.
13 Rail de fixation du support amovible.
14 Partie située du côté interne de la carrosserie, en bordure du renfoncement.
15 Hayon
2 Dispositif d'éclairage.
20 Guide de lumière diffusant formé par une pluralité de fibres optiques de faible diamètre arrangées en nappe
200 Diode électroluminescente.
201 Nappe de fibres optiques formant la partie éclairante du guide de lumière.
202 Faisceau de fibres optiques.
203 Fils de trame.
204 Fibres optiques de la nappe diffusante.
21 Support amovible.
210 Section droite du support amovible.
3 Dispositif de commande d'ouverture.
31 Dispositif de commande d'ouverture par effet capacitif.
311 et 312 Conducteurs polarisés générant un champ électrique.
313 Champ électrique.
32 Dispositif de commande d'ouverture par effet optique.
321 Fibre optique de commande d'ouverture.
322 Rayon lumineux.
323 Guide dans lequel est disposée la fibre optique.
324 Espace intermédiaire entre la fibre optique et le guide.
33 Dispositif de commande d'ouverture par effet acoustique
331 Conduit élastique et déformable.
332 Emetteur d'onde acoustique.
333 Récepteur d'onde acoustique.
334 Onde acoustique.
34 Dispositif de commande par effet résistif.
341 et 342 Conducteurs de l'électricité.
4 Vitre arrière.
L Flux lumineux.d Longueur du guide de lumière diffusant situé du côté externe de la carrosserie.

## Revendications

1. Elément de carrosserie (1), formant une surface externe (10) d'un véhicule automobile, comprenant un dispositif d'éclairage (2) de plaque d'immatriculation (11) et un dispositif de commande d'ouverture (3, 31,32, 33, 34) dudit élément de carrosserie (1), **caractérisé en ce que** ledit dispositif d'éclairage (2) comprend un guide de lumière diffusant (20), relié à une source de lumière (200), et formé d'une pluralité de fibres optiques arrangées en nappe souple, de sorte que le dispositif d'éclairage (2) émet un flux lumineux (L) en tout point d'une partie éclairante (201) dudit guide de lumière diffusant (20) et **en ce que** le guide de lumière diffusant (20) est monté sur un support souple (21) à l'intérieur duquel est disposé le dispositif de commande d'ouverture (3, 31, 32, 33, 34), s'étendant transversalement sur toute la longueur du dispositif d'éclairage (2) de sorte que ladite commande d'ouverture (3) est actionnable en un point quelconque de la partie éclairante (201) du dispositif d'éclairage (2).

2. Elément de carrosserie (1) selon la revendication 1, dans lequel le support est formé par extrusion ou par moulage à partir d'un matériau thermoplastique ou élastomérique.

3. Elément de carrosserie selon l'une quelconque des revendications précédentes, dans lequel le support (21) présente une forme sensiblement cylindrique, et sur lequel les fibres optiques (204) de la nappe (20) sont disposées selon des génératrices.

4. Elément de carrosserie (1) selon l'une quelconque des revendications précédentes, dans lequel la partie éclairante (201) du guide de lumière s'étend transversalement sur une longueur (d) égale ou supérieure à la longueur de ladite plaque d'immatriculation (11), de sorte que ladite plaque d'immatriculation (11) reçoit un flux lumineux constant sur toute sa longueur.

5. Elément de carrosserie selon l'une quelconque des revendications précédentes, dans lequel les fibres optiques (204) de la nappe ont un diamètre réduit, inférieur à 1 mm, et préférentiellement inférieur ou égal à 0,5 mm de manière à augmenter la souplesse de ladite nappe.

6. Elément de carrosserie (1) selon l'une quelconque des revendications précédentes, dans lequel le guide de lumière diffusant (20) est relié à une de ses extrémités à une ou plusieurs sources de lumière (200) situées d'un côté interne de l'élément de carrosserie (1).

7. Elément de carrosserie selon l'une quelconque des revendications précédentes, dans lequel le guide de lumière diffusant (20) est placé dans un renfoncement (12) de la carrosserie, de sorte que le flux lumineux (L) est dirigé vers la seule surface (10) de la carrosserie dudit véhicule adjacente audit renfoncement (12), et sur laquelle est fixée la plaque d'immatriculation (11).

8. Elément de carrosserie selon l'une quelconque des revendications précédentes, dans lequel la source de lumière (200) est formée par une ou plusieurs diodes électroluminescentes.

9. Elément de carrosserie (1) selon l'une quelconque des revendications précédentes, dans lequel le dispositif de commande d'ouverture (3) est de type résistif (34) ou de type acoustique (33), ou de type optique (32), ou de type capacitif (31).

10. Elément de carrosserie selon l'une quelconque des revendications précédentes, formant le un hayon arrière d'un véhicule

## Patentansprüche

1. Karosserieelement (1), das eine Außenfläche (10) eines Kraftfahrzeugs bildet, aufweisend eine Beleuchtungsvorrichtung (2) des Kennzeichenschilds (11) und eine Öffnungssteuerungsvorrichtung (3, 31, 32, 33, 34) des Karosserieelements (1),
**dadurch gekennzeichnet,**
**dass** die Beleuchtungsvorrichtung (2) einen Streulichtleiter (20) aufweist, der mit einer Lichtquelle (200) verbunden ist und aus einer Vielzahl von optischen Fasern gebildet ist, die in einem flexiblen Band angeordnet sind, derart, dass die Beleuchtungsvorrichtung (2) an jedem Punkt eines Beleuchtungsabschnitts (201) des Streulichtleiters (20) einen Lichtstrom (L) emittiert, und
**dass** der Streulichtleiter (20) an einem flexiblen Träger (21) angebracht ist, in dem eine Öffnungssteuervorrichtung (3, 31, 32, 33, 34) angeordnet ist, die sich quer über die gesamte Länge der Beleuchtungsvorrichtung (2) erstreckt, so dass die Öffnungssteuerung (3) an einem beliebigen Punkt des Beleuchtungsabschnitts (201) der Beleuchtungsvorrichtung (2) betreibbar ist.

2. Karosserieelement (1) nach Anspruch 1, wobei der Träger durch Extrusion oder Formen aus einem thermoplastischen Material oder einem Elastomer gebildet ist.

3. Karosserieelement (1) nach einem der obigen Ansprüche, wobei der Träger (21) eine im Wesentlichen zylindrische Form aufweist und auf dem die optischen Fasern (204) des Bands (20) entlang der Erzeugenden angeordnet sind.

4. Karosserieelement (1) nach einem der vorhergehenden Ansprüche, wobei sich der Beleuchtungsabschnitt (201) des Lichtleiters quer über eine Länge (d) erstreckt, die gleich oder größer als die Länge des Kennzeichenschilds ist (11), so dass das Kennzeichenschild (11) über seine gesamte Länge einen konstanten Lichtstrom erhält.

5. Karosserieelement (1) nach einem der obigen Ansprüche, wobei die optischen Fasern (204) des Bands einen reduzierten Durchmesser, weniger als 1 mm und vorzugsweise weniger als oder gleich 0,5 mm aufweisen, um die Flexibilität des Bands zu erhöhen.

6. Karosserieelement (1) nach einem der vorhergehenden Ansprüche, wobei der Streulichtleiter (20) an einem Ende mit einer oder mehreren Lichtquellen (200) verbunden ist, die an einer Innenseite des Körpers angeordnet sind.

7. Karosserieelement (1) nach einem der vorhergehenden Ansprüche, wobei der Streulichtleiter (20) in einer Aussparung (12) der Karosserie angeordnet ist, so dass der Lichtstrom (L) auf die der Aussparung (12) benachbarte einzelne Oberfläche (10) der Karosserie des Fahrzeugs gerichtet ist, und an der das Kennzeichenschild (11) befestigt ist.

8. Karosserieelement (1) nach einem der vorhergehenden Ansprüche, bei dem die Lichtquelle (200) aus einer oder mehreren Leuchtdioden besteht.

9. Karosserieelement (1) nach einem der vorhergehenden Ansprüche, wobei die Öffnungssteuervorrichtung (3) resistiver Art (34) oder akustischer Art (33) oder optischer Art (32) oder kapazitiver Art (31) ist.

10. Karosserieelement nach einem der vorhergehenden Ansprüche, das die Heckklappe eines Fahrzeugs bildet.

## Claims

1. Body element (1), forming an outer surface (10) of a motor vehicle, comprising a device (2) for illuminating a number plate (11) and a device for controlling opening (3, 31, 32, 33, 34) of said body element (1), **characterised in that** said illuminating device (2) comprises a diffusing light guide (20), connected to a source of light (200), and formed by a plurality of optical fibres arranged in a flexible sheet, in such a way that the illuminating device (2) emits a luminous flux (L) at all points of an illuminating portion (201) of said diffusing light guide (20) and **in that** the diffusing light guide (20) is mounted on a flexible support (21) inside of which is disposed the device (3, 31, 32, 33, 34) for controlling opening extending transversely over the entire length of the illuminating device (2) in such a way that said control of opening (3) can be actuated at any given point of the illuminating portion (201) of the illuminating device (2).

2. Body element (1) according to claim 1, wherein the support is formed by extrusion or by moulding from a thermoplastic or elastomer material.

3. Body element according to any one of the previous claims, wherein the support (21) has a substantially cylindrical shape, and on which the optical fibres (204) of the sheet (20) are disposed according to generatrixes.

4. Body element (1) according to any one of the previous claims, wherein the illuminating portion (201) of the light guide extends transversely over a length (d) greater than or equal to the length of said number plate (11), in such a way that said number plate (11) receives a luminous flux that is constant over its entire length.

5. Body element according to any one of the previous claims, wherein the optical fibres (204) of the sheet have a reduced diameter, less than 1mm, and preferably less than or equal to 0.5mm in such a way as to increase the flexibility of said sheet.

6. Body element (1) according to any one of the previous claims, wherein the diffusing light guide (20) is connected at one of its ends to one or more sources of light (200) located on an inner side of the body element (1) .

7. Body element according to any one of the previous claims, wherein the diffusing light guide (20) is placed in a recess (12) of the body, in such a way that the luminous flux (L) is directed towards the only surface (10) of the body of said vehicle adjacent to said recess (12), and onto which the number plate (11) is fastened.

8. Body element according to any one of the previous claims, wherein the source of light (200) is formed by one or more light-emitting diodes.

9. Body element (1) according to any one of the previous claims, wherein the device (3) for controlling opening is of the resistive (34) type or of the acoustic (33) type, or of the optical (32) type, or of the capacitive (31) type.

10. Body element according to any one of the previous claims, forming the tailgate of a vehicle
